Europäisches Patentamt

European Patent Office

Office européen des brevets

(19)

(11) Numéro de publication: **0 158 134**
**A1**

(12) # DEMANDE DE BREVET EUROPEEN

(21) Numéro de dépôt: **85102743.3**

(22) Date de dépôt: **11.03.85**

(51) Int. Cl.⁴: **C 03 C 17/32**

(30) Priorité: **16.03.84 FR 8404155**

(43) Date de publication de la demande:
**16.10.85 Bulletin 85/42**

(84) Etats contractants désignés:
**AT BE CH DE FR GB IT LI NL**

(71) Demandeur: **SOCIETE DES VERNIS BOUVET**
**B.P. 51 Rue Chanay 14**
**I-71700 Tournus(FR)**

(72) Inventeur: **Dubois, Jean**
**"En Bagatelle"**
**F-71700 Tournus(FR)**

(72) Inventeur: **Hesling, Michel**
**Rue Raymond Dorey**
**F-71700 Tournus(FR)**

(74) Mandataire: **Casalonga, Alain et al,**
**BUREAU D.A. CASALONGA OFFICE JOSSE & PETIT**
**Baaderstrasse 12-14**
**D-8000 München 5(DE)**

(54) **Procédé de traitement de récipients en verre avec un vernis protecteur et vernis de protection mis en oeuvre.**

(57) L'invention est relative à un procédé de traitement de récipients en verre consistant à appliquer sur la surface desdits récipients chauffés à une température de 80 à 150°C une composition contenant a) un liant à séchage chimique constitué par une résine époxy liquide ou masse émulsifiable et soit par une résine polyaminoamide soluble dans l'eau et d'un indice d'amine variant entre 150 et 200, soit par un adduct d'amine masse organosoluble et le mélange des deux et b) un liant à séchage physique constitué par une émulsion cationique contenant des polymères acryliques ou des polyuréthanes.

EP 0 158 134 A1

Procédé de traitement de récipients en verre avec un vernis protecteur et vernis de protection mis en oeuvre.

L'invention a pour objet un procédé de traitement de récipients en verre à l'aide d'un vernis afin de renforcer la résistance à la rayure et aux chocs du verre et d'en augmenter le glissant.

On connaît depuis de nombreuses années un procédé de traitement des récipients en verre comportant essentiellement deux phases; d'une part, un traitement à chaud dit encore "bout chaud" au moyen de sels métalliques tels que des sels d'étain ou de titane appliqués sur les articles à une température de 500 à 600°C et d'autre part une deuxième phase dit traitement froid ou "bout froid" par application de cire ou de divers corps gras sur les récipients à une température d'environ 100°C. Ces traitements sont destinés à améliorer la résistance à la rayure et aux chocs des récipients en verre et à les lubrifier.

L'amélioration de la résistance et du glissant des récipients en verre est particulièrement importante en raison du fait que de tels récipients sont utilisés soit pour le lavage, soit pour le remplissage dans des dispositifs mécaniques dans lesquels ils sont amenés à circuler à grande vitesse et dans lesquels ils risquent de se fracturer ou d'arrêter les machines si la résistance et leur glissant n'étaient pas suffisants.

L'utilisation de ce type de traitement présente cependant l'inconvénient de mettre en oeuvre des sels d'étain et de titane très chers. Les sels utilisés présentent cependant des problèmes au niveau des risques de pollution.

La demanderesse a découvert maintenant que l'on pouvait remplacer ce procédé en deux étapes par un traitement mettant en oeuvre deux types de liant compatibles, d'une part un liant à séchage chimique qui apporte les performances mais nécessite plusieurs heures pour être réticulé et d'autre part un liant à séchage physique permettant d'obtenir un séchage rapide et une dureté suffisante pour les manipulations en fin de chaîne, c'est-à-dire au bout de quelques minutes.

Un tel traitement qui ne met pas en oeuvre des sels d'étain et de titane permet, de façon surprenante, d'améliorer la résistance des récipients en verre et le glissant de ceux-ci.

Toutefois, dans le cas de bouteilles et flacons de verre super allégé, on peut, afin d'augmenter la sécurité d'utilisation par renforcement de la résistance à l'explosion, associer le traitement classique à chaud à l'aide de sel d'étain ou de titane avec le vernis de traitement. Ceci permet encore d'alléger davantage tout en continuant à produire des conteneurs en verre d'excellente qualité.

L'invention a donc pour objet un procédé de traitement de récipients en verre mettant en oeuvre deux types de liant, l'un à séchage chimique, l'autre à séchage physique. Un autre objet de l'invention est constitué par les compositions mises en oeuvre au cours de ce traitement.

D'autres objets apparaîtront à la lecture de la description des exemples qui suivent.

Le procédé de traitement de récipients en verre conforme à l'invention est essentiellement caractérisé par le fait que l'on applique sur la surface desdits récipients chauffés à une température de 80 à 150°C une composition comprenant :

a) un liant à séchage chimique constitué par une résine époxy liquide ou masse, émulsifiable et soit une résine polyaminoamide soluble dans l'eau et d'un indice d'amine pouvant varier entre 150 et 250, soit un adduct d'amine masse organosoluble ou le mélange des deux,

b) un liant à séchage physique constitué par une émulsion cationique contenant des polymères acryliques, des polyuréthannes ou d'autres polymères présentant le même caractère ionique.

Dans le cas de récipient en verre super-allégé, le traitement peut être précédé par un traitement à chaud classique tel qu'aux sels d'étain et de titane.

La résine époxy utilisée plus particulièrement dans le procédé conforme à l'invention est une résine à base de bisphénol A ou bien A + F/épichlorhydrine, d'équivalents époxy de 150 à 500, avec ou sans diluant réactif. A cet effet, on peut mentionner les produits

3                              0158134

commercialisés sous les références : J 157 par la Société SHELL,
PY 340 par la Société CIBA, LOPOX 205 AE par la Société CDF,
Eurepox 756 par la Société SHERING, BECKOPOX EP 122 par la Société
HOECHST.

Les résines polyaminoamides utilisées en association avec la
résine époxy sont choisies en particulier parmi les produits commercialisés sous les dénominations : ARALDITE HZ 340 par la Société
CIBA, LOPOX D 508 par la Société CDF, EUREDUR 429-XE 430 par la
Société SHERING.

Le rapport entre la résine époxy et les polyaminoamides peut
varier entre 1/0,5 et 1/3 selon les conditions. Le meilleur compromis
se situe autour de 1/1.

L'adduct d'amine utilisable à la place du polyaminoamide en
association avec la résine époxy ou en mélange avec celle-ci est
organosoluble et a un point de ramollissement de 50 à 75°C de préférence et un équivalent d'hydrogène de 150 à 450. Cet adduct est rendu
soluble à l'eau après acidification, par exemple avec l'acide acétique. Des résines plus particulièrement utilisables sont entre
autres la résine HT 834 de la Société CIBA, EPICURE 104 de la Société
SHELL, EPINORAMA 362 M de la Société CECA, HÄRTER SVP de la Société
HARBURGER FETTCHEMIE. La solution utilisée a un pH de l'ordre de 7 à
8. Le rapport entre la résine époxy et l'adduct d'amine est compris
entre 1 : 0,5 et 1 : 3, le rapport préférentiel étant de l'ordre
de 1 : 1,5.

Les émulsions cationiques utilisées comme liant à séchage physique, préférées sont en particulier des dispersions cationiques
aqueuses de résine acrylique autoréticulantes telles que par exemple
le produit vendu sous la dénomination PLEXTOL DV 588 de la Société
RÖHM. On peut également citer les produits ACRYMUL 270 R de la
Société PROTEX, ACRYMUL 255 R de la Société PROTEX, BASOPLAST 258 ou
280 de la Société BASF. Le rapport entre les liants à séchage chimique et à séchage physique est fonction des conditions de durcissement et des performances exigées. Il peut varier largement entre
environ 1,5 : 1 à 9 : 1, le meilleur compromis étant de l'ordre
de 4 : 1.

0158134

Les compositions conformes à l'invention peuvent également contenir différents additifs et plus particulièrement on peut appliquer des silanes améliorant l'adhérence sur le verre tels que plus particulièrement les triméthoxysilane de gamma glycidoxypropyle en pourcentage compris entre 10 et 30% du liant sec tel que le produit vendu sous la dénomination SILANE 187 à la Société UNION CARBIDE.

On peut améliorer la dureté et les glissants en incorporant dans la composition une dispersion non ionique de cire de polyéthylène oxydée dont la température de ramollissement peut varier entre environ 95°C pour les cires de bas poids moléculaire à 150°C pour les cires de haut poids moléculaire. On peut citer à cet effet la cire EN 14 vendue par la Société POLYCHIMIE, FORBEST VP-PEOX de la Société LUCAS MEYER, AQUACER 502 ou 531 de la Société CERACHEMIE, DISPERSION C-1614 de la Société POLYCHIMIE. On pourra également utiliser des silicones tels que la LUBROMINE SPA de la Société PROTEX.

La compatibilité avec les colles des étiquettes est encore améliorée par un complément d'agent émulsifiant dérivé d'alkylphénol avec un indice HLB adapté. On peut citer à cet effet les agents émulsifiants vendus sous la dénomination ANTAROX CO 990 par la Société GAF, IGEPAL CO 997 de POLYCHIMIE, ANTAROX CO 970 par la Société GAF, HUMIPHEN BA 77 par la Société GAF, TWEEN 20 par la société ATLAS, CIRRASOL de la Société ATLAS, MYRJ de la Société ATLAS. On utilise la cire en des proportions de 10 à 40% calculées sur le poids du liant sec et l'agent émulsifiant dans des proportions de 10 à 30% par rapport au poids du liant sec.

Les compositions conformes à l'invention peuvent également contenir comme additif une polyvinylpyrrolidone ou un copolymère de celle-ci. Leur poids moléculaire est compris de préférence entre 1000 et 500 000.

Le milieu solvant utilisé peut être constitué par de l'eau ou par un mélange d'eau et d'un solvant organique choisis parmi les alcools et les glycols. Ces compositions peuvent se présenter sous forme de solutions telles que les solutions aqueuses ou hydroalcooliques.

Les compositions suivant la nature des régimes utilisés peuvent également se présenter sous forme d'émulsion ou de solutions colloïdales à base des solvants indiqués ci-dessus. Dans le cas des émulsions, on utilise de préférence des alkyléthers de diéthylèneglycol tels que l'éther monobutylique de diéthylèneglycol. Ce type de solvant est présent dans des proportions allant jusqu'à 30% et permet notamment d'obtenir dans le cas où on utilise des émulsions un film clair et transparent sur les récipients en verre.

Les compositions ainsi préparées ont une stabilité dans le temps relativement limitée et il est généralement souhaité de les préparer avant l'emploi. Elles peuvent cependant être conservées pendant quelques jours.

Selon un procédé de préparation, on prépare la composition en mélangeant au préalable une partie A contenant la résine époxy en solution dans un solvant organique avec une partie B contenant le polyaminoamide ou l'adduct d'amine en solution. Après mélange, on prépare par ailleurs une composition contenant le liant à séchage physique ainsi que les différents additifs dans le solvant et l'on mélange ces deux compositions dans les rapports indiqués ci-dessus.

Les compositions après avoir été préparées sont appliquées directement à la sortie des lignes de fabrication sur les récipients en verre lorsque ces récipients sont chauds et à une température de 80 à 150°C, de préférence 100 à 140°C. L'application peut se faire par pistolettage au moyen d'un pistolet pneumatique. Le film devra recouvrir au moins la surface extérieure du récipient en verre, être continu et présenter une épaisseur qui peut être variable en fonction du résultat désiré comprise de préférence entre 0,5 et 5 microns et qui est de l'ordre généralement de 1 à 2 microns. Après application, on nettoie à l'eau. On obtient ainsi pour des récipients en verre revêtus par cette pellicule un très grand glissant, une résistance améliorée à la rayure, à la pasteurisation, au stockage en milieu particulièrement agressif et au rinçage avec une solution de soude caustique chaude, de plus le revêtement ne favorise pas le développement des moisissures. Ce procédé permet également d'utiliser directement en bout de chaîne les récipients en verre en raison du séchage très rapide.

On a constaté par ailleurs que l'on obtenait un glissant supérieur à celui qui est donné au traitement classique qui est de l'ordre d'un angle de glisse de 8 à 13° et il est également possible de moduler la glisse parce qu'on sait obtenir une glisse moins importante. La résistance à la rayure est également améliorée.

La description et les compositions utilisées conformément à l'invention peuvent être préparées sous forme des compositions prêtes à l'emploi ou conditionnées sous forme d'équipements comportant les différents éléments à mélanger au moment de l'emploi. Il est également possible de préparer ces compositons sous forme concentrée, auquel cas les proportions de résine peuvent avoir des concentrations jusqu'à 10 fois plus élevées que celles indiquées ci-dessus.

Les exemples suivants sont destinés à illustrer l'invention sans pour autant présenter un caractère limitatif.

### EXEMPLE 1

On a préparé le vernis de protection pour verre suivant. On a préparé tout d'abord une composition de A contenant la résine J-157 vendue par la Société SHELL en solution à 10% dans de l'eau déminéralisée.

On a préparé par ailleurs une composition B contenant le produit vendu sous la dénomination XE-430 par la Société SHERING en solution à 5% dans de l'eau déminéralisée.

On prépare ensuite une partie C en introduisant du Plextol DV 588 , de l'Aquacer 502, du Silane 187 , du Bevaloïd 6935 et du butyldiglycol. On mélange la composition 1 résultant du mélange de la partie A) et de la partie B) avec la composition 2 résultant de la partie C) sous agitation lente. La composition en résultant a la composition suivante :

| | |
|---|---|
| Résine J-157 | 0,5 g |
| XE-430 | 1,0 g |
| Plextol DV 588 | 0,5 g |
| Aquacer 502 | 0,715 g |
| Silane 187 | 0,250 g |
| Bevaloïd 6935 | 0,4 g |

| Butyldiglycol | 9,11 g |
|---|---|
| Eau déminéralisée | 87,54 g |

La composition se conserve pendant une durée supérieure à 24 heures. On l'applique sur des bouteilles à une température de 120 à 140°C au moyen d'un pistolet pneumatique.

Après séchage pendant 7 minutes à 40°C on constate l'excellente résistance à la rayure, ce produit est compatible avec les colles à la caséine habituelles et les colles végétales pour verre traité.

EXEMPLE 2

On prépare le vernis suivant à base des compositions indiquées ci-dessous.

Partie A

| Araldite PY 340 | 5,0 g |
|---|---|
| Butyldiglycol | 75,0 g |
| Eau déminéralisée | 15,0 g |
| Silane A-187 | 5,0 g |

Partie B

| HT 834 (Araldite) | 14,0 g |
|---|---|
| Butyléthylglycol | 21,7 g |
| Acide acétique | 1,6 g |
| Eau déminéralisée | 62,7 g |

Partie C

| Plextol DV 588 | 10,0 g |
|---|---|
| Eau déminéralisée | 79,5 g |
| Ammoniaque | 0,5 g |
| Cire EN 14 | 10,0 g |

La composition C se présente sous forme d'émulsion, alors que les compositions A et B se présentent sous forme de solutions.

On mélange ainsi en poids de la partie A avec 5 parties en poids de la partie B pour former la composition 1 on mélange 5 parties de la partie B avec de l'eau déminéralisée 80 parties pour avoir la composition 2, verser le mélangeant dans le mélange 2 lentement et sous agitation. On applique cette composition sur un récipient en verre chaud à 100 - 140°C à l'aide d'un pistolet robot.

0158134

L'épaisseur déposée est de 1 à 2 microns. Le récipient est lavé à l'eau.

La dureté et la résistance sont excellentes en sortie de chaîne et s'améliorent dans les 48 heures.

REVENDICATIONS

1. Procédé de traitement de récipients en verre , caractérisé par le fait que l'on applique sur la surface desdits récipients traités ou non à chaud, chauffés à une température de 80 à 150°C, une composition comprenant :

a) un liant à séchage chimique constitué par une résine époxy liquide ou masse émulsifiable et soit par une résine polyaminoamide soluble dans l'eau ayant un indice d'amine de 150 à 250, soit par un adduct d'amine masse organosoluble ou le mélange des deux,

b) un liant à séchage physique constitué par une émulsion cationique contenant des polymères acryliques, polyacryliques, des polyuréthannes.

2. Procédé selon la revendication 1, caractérisé par le fait que la résine époxy utilisée dans le procédé est une résine à base de bisphénol A ou de bisphénol A + F/épichlorhydrine ayant une proportion d'équivalents époxy de 150 à 500.

3. Procédé selon la revendication 1, caractérisé par le fait que le rapport entre la résine époxy et les polyaminoamides varie entre 1/0,5 et 1/3.

4. Procédé selon la revendication 1, caractérisé par le fait que l'adduct d'amine utilisé en association avec la résine époxy à un point de ramollissement de 50 à 75°C et un équivalent d'hydrogène de 150 à 450.

5. Procédé selon la revendication 1 ou 4, caractérisé par le fait que l'adduct d'amine est rendu soluble à l'eau après acidification avec un acide organique.

6. Procédé selon l'une quelconque des revendications 1, 4 et 5, caractérisé par le fait que le rapport entre la résine époxy et l'adduct d'amine est compris entre 1 : 0,5 et 1 : 3.

7. Procédé selon la revendication 1, caractérisé par le fait que les émulsions cationiques utilisées comme liant à séchage physique sont les dispersions cationiques aqueuses de résine acrylique autoréticulante.

8. Procédé selon l'une quelconque des revendications 1 à 7, caractérisé par le fait que le rapport entre les liants à séchage

0158134

chimique et les liants à séchage physique varie entre 1,5 : 1 et 9 : 1.

9. Procédé selon l'une quelconque des revendications 1 à 8, caractérisé par le fait que les compositions utilisées dans le procédé contiennent en plus des silanes améliorant l'adhérence sur le verre.

10. Procédé selon la revendication 9, caractérisé par le fait que l'on utilise comme silane un triméthoxysilane de gamma glycidoxypropyle.

11. Procédé selon l'une quelconque des revendications 1 à 10, caractérisé par le fait que les compositions contiennent en plus une dispersion non ionique de cire de polyéthylène oxydée ayant un point de ramollissement variant entre 95°C et 150°C et/ou des silicones.

12. Procédé selon l'une quelconque des revendications 1 à 11, caractérisé par le fait que les compositions contiennent un agent émulsifiant dérivé d'alkylphénols.

13. Procédé selon la revendication 11 ou 12, caractérisé par le fait que l'on utilise la cire dans les proportions de 10 à 40% par rapport au poids du liant sec et que l'agent émulsifiant est utilisé dans une proportion de 10 à 30% par rapport au poids du liant sec.

14. Procédé selon l'une quelconque des revendications précédentes, caractérisé par le fait que les compositions utilisées contiennent en plus une polyvinylpyrrolidone ou un copolymère de celle-ci ayant un poids moléculaire compris entre 1000 et 500 000.

15. Procédé selon l'une quelconque des revendications 1 à 15, caractérisé par le fait que les compositions utilisées se présentent sous forme d'émulsion ou de solutions colloïdales à base de solvants choisi parmi l'eau et les solvants organiques tels que les alcools et des glycols.

16. Procédé selon la revendication 15, caractérisé par le fait que l'on utilise une émulsion à base d'alkyléther de diéthylèneglycol.

17. Composition destinée à être appliquée sur les récipients en verre, caractérisée par le fait qu'elle comprend d'une part a) un liant à séchage chimique constitué par une résine époxy liquide ou masse émulsifiable et soit une résine polyaminoamide solide dans l'eau et ayant un indice d'amine variant entre 150 et 200, soit un adduct d'amine masse organosoluble ou le mélange des deux et b) un liant à séchage physique constitué par une émulsion cationique contenant des polymères acryliques, des polyuréthanes dans un solvant approprié.

18. Composition selon la revendication 17, caractérisée par le fait qu'elle contient en plus des cires de polyéthylène oxydées et/ou des silicones.

19. Procédé de préparation de la composition selon la revendication 17 ou 18, caractérisé par le fait qu'on mélange au préalable une partie A contenant la résine époxy en solution dans un solvant organique à une partie B contenant le polyaminoamide ou l'adduct d'amine en solution et, dans un deuxième temps, après mélange, on prépare une composition contenant le liant à séchage physique ainsi que les différents additifs dans le solvant et on procède au mélange de ces compositions dans le rapport défini dans les revendications précédentes.

20. Procédé de traitement selon l'une quelconque des revendications 1 à 16, caractérisé par le fait que l'on applique la composition à la sortie des lignes de fabrication sur des récipients en verre traité ou non à chaud, à une température de l'ordre de 80 à 150°C par pistolettage de telle façon à former un revêtement continu sur la surface du récipient et qu'on procède au nettoyage à l'eau après application.

### Office européen
### des brevets

## RAPPORT DE RECHERCHE EUROPEENNE

EP  85 10 2743

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int Cl 4) |
|---|---|---|---|
| Y | EP-A-0 057 595  (CELANESE CORP.)  * Revendication 1 * | 1,2,4, 9-12, 15-16 | C 03 C  17/32 |
| Y | AU-B-  13 231  (REICHOLD CHEMICALS) (A.D. 1976)  * Revendication; exemples 15-17 * | 1 | |
| Y | US-A-4 115 599  (L.J. TAYLOR)  * Revendication 1 * | 1 | |
| Y | FR-A-2 207 809  (ARTHUR D. LITTLE)  * Revendication 1; page 6, lignes 19-26 * | 1,2,15 ,16 | |
| Y | US-A-3 285 802  (R.M. SMITH)  * Colonne 6, exemple F * | 1 | DOMAINES TECHNIQUES RECHERCHES (Int. Cl.4)  C 03 C  17/00 |

Le présent rapport de recherche a été établi pour toutes les revendications

| Lieu de la recherche | Date d'achèvement de la recherche | Examinateur |
|---|---|---|
| LA HAYE | 21-06-1985 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82